# EUROPEAN PATENT SPECIFICATION

(11) **EP 1 399 007 B1**
(45) Date of publication and mention of the grant of the patent: **01.12.2004**
(21) Application number: 02745804.1
(22) Date of filing: 25.06.2002
(51) Int. Cl.: A01D 46/26, A01G 3/08

(54) **ADAPTIVE HOOK APPLIED TO A SINUSOIDAL VIBRATION GENERATOR**
ADAPTIVER HAKEN AUFGEBRACHT AUF SINUSFÖRMIGER VIBRATIONSGENERATOR
CROCHET COMPENSATEUR APPLIQUE A UN GENERATEUR DE VIBRATION SINUSOIDALE

(30) Priority: 25.06.2001 IT RM20010363
(43) Date of publication of application: 24.03.2004
(73) Proprietor: Castelmani, Franco, 00025 Gerano (RM) (IT)
(72) Inventor: Castelmani, Franco, 00025 Gerano (RM) (IT)
(74) Representative: Iannone, Carlo Luigi
(86) International application number: PCT/IT2002/000421
(87) International publication number: WO 2003/000034

(56) References cited:
- EP-A- 0 906 721
- DE-B- 1 182 893
- FR-A- 1 496 592
- FR-A- 2 208 458
- FR-A- 2 536 243
- FR-A- 2 639 176
- US-A- 3 377 786

## Description

The present invention relates to an adaptive hook applied to a sinusoidal vibration generator.

More specifically, the invention concerns to a hook of the above kind that, if coupied at the end of a sinusoidal vibration generator, is able, once applied to a branch, to make fruits dropping.

By the hook according to the present invention, the vibrations to which the branch is subjected, make the fruits detaching without damaging the plant. The above means that the collection work, that is difficult and tiring, if carried out by the standard methods, is easier and faster employing the hook according to the present patent application.

The most relevant aspect of the invention is represented by the way of impart the "sinusoidal" vibrations by said hook The inventive solution is the assembly comprised of the sinusoidal vibration generator and of the instrument applied to the same, that, according to the needings, can be comprised of the adaptive hook, or of a shear to prune.

As it is well known, instruments exist to collect olives, or other fruits, that, however are not able to impart suitable stresses, having, as far as it is known to the inventor, some drawbacks, such as:
plant can suffer and dry up;
vibrations are not sufficient and the work is only partially carried out, due to the lack of transfer of the suitable vibrations;
stresses are of the impulsive kind;
hooks have a fixed configuration that does not allow the suitable grip of the branch to be shaken;
besides other drawbacks that are not mentioned for sake of brevity. Document FR-2639176 discloses the preamble of claim 1.

In this contest it is included the solution suggested according to the present invention that is included in the technical field of the oleodynamic instruments and in that applicative of the tools, working instruments, particularly agricultural instruments.

With respect to the known technique, the solution according to the present invention has the advantage of not damaging the plant on which it is used and further it can also be used alone, or applied to another instrument, such as a bush-cutter, and can also become a prune tool, replacing the hook with a shear.

Advantages obtained by the solution according to the present invention are essentially due to the "kind of sinusoidal vibrations" and to the adaptability of the final devices that are applied to said generator.

Vibrations, generated by the instrument according to the invention, are of the "variable sinusoidal" kind. This means that the grip on the ram by the adaptive hook, progressively and delicately closes the parts, until gripping the branch to start the vibration, said vibration varying its frequency in function of the number of round of the motor, the speed of which is imparted by an accelerator regulating the rounds of the motor of the apparatus to which the output shaft is connected, thus generating the natural resonating frequency of the fruit/branch.

These and other results are obtained according to the present invention by suggesting an adaptive hook comprised of a fixed part and of a movable part, both parts being provided with a rubber pad, of a main body, generating vibrations, of a rod containing the output shaft and of fixing elements, and, finally, of a vibration intensity regulator. A shear comprised of two blades, one fixed blade and one movable blade, can be coupled to the generator. The invention is included in the technical field of the oleodynamic instruments and in that of the agricultural instruments.

The present invention will be now described, for illustrative but not limitative purposes, according to its preferred embodiments, with particular reference to the figures of the enclosed drawings, wherein:
figure 1 is a lateral view of the vibration generator with the adaptive hook;
figure 2 is a schematic view of the vibration generator, adaptive hook, pruning shear, extension rod assembly;
figure 2A is a cut away view of the oleodynamic group;
figure 2B shows the ring nut group with the springs for positioning the piston;
figure 2C shows the adaptive hook;
figure 2D shows the shear;
figure 2E shows the extension; and
figure 3 is a schematic view of a preferred embodiment of the adaptive hook according to the invention.

Making reference to the figures of the enclosed drawings, the features of the device according to the invention can be seen and individuated.

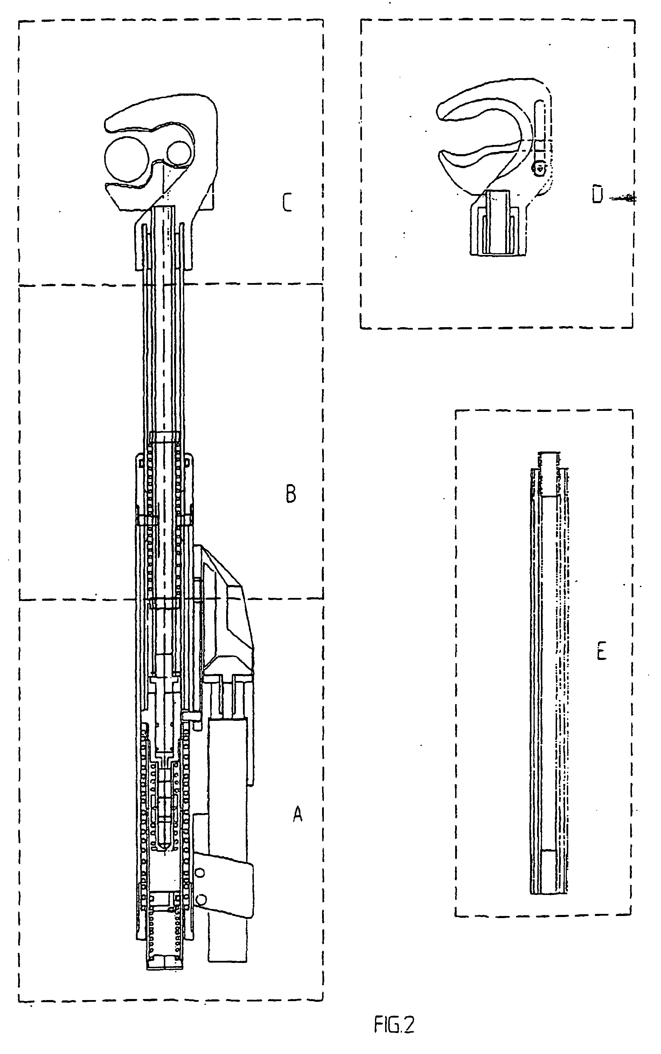

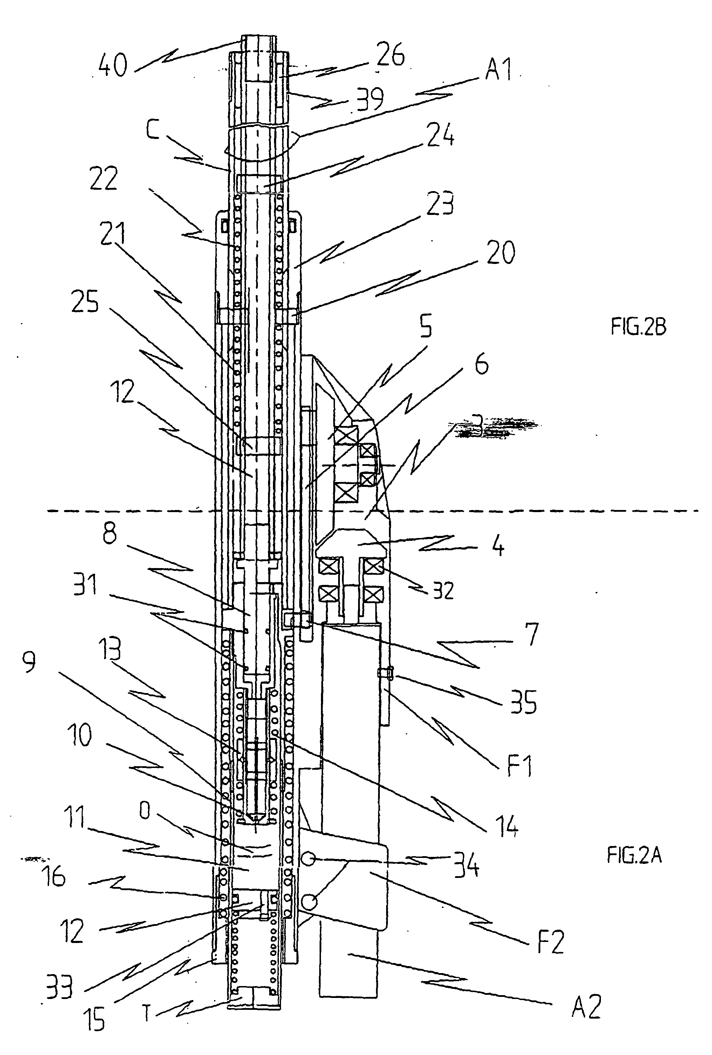

The kind of vibrations individuated by the expression "sinusoidal" is due to a connecting rod - crank system creating a reciprocating motion. Connecting rod 6 is operated by a gear 5 connected to a pinion gear 4, to which the rotation is applied, as it is shown in figures 2A and 2B.

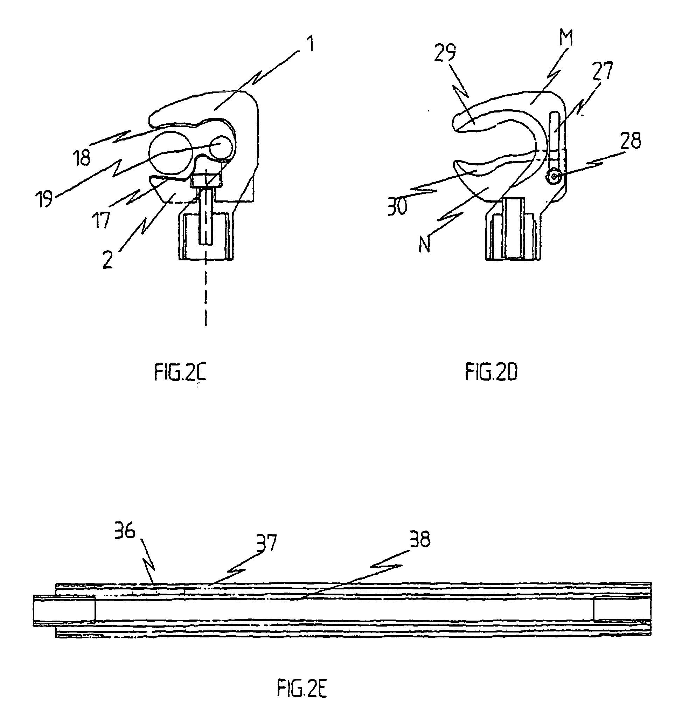

By the term "adaptive hook" it is meant that the hook, as well as the shear to prune, have a fixed part and a movable part. Specifically, adaptive hook is provided on both parties, with pads 17 and 18, as it can be seen from figure 2C, comprised of soft material able to tighten, and keep tightened, the branch, without damaging the same: in fact, branch is immobilised gently but also decidedly, and without its sliding between the parties immobilising the same. By the term "adaptive" it is also meant that the hook not only grips the pads, but also conform to the sizes of the branch, using the narrower part for smaller branches 19 and the larger part for bigger branches 19.

It is the kind of vibration that makes safe and efficient this instrument. In fact, providing sinusoidal vibrations to a branch with fruits, it is on the fruit - branch resonance frequency that it is produced such an amplitude to cause the fall of the fruit and it is by the speed of the motor, operated by the operator, that the vibrating system oscillates within a frequency range: but it is only a small frequency range to determine the fall of the fruit. It is clear that the operator can determine, time by time, also on the basis of the kind of fruit, the frequency to be applied by the accelerator of the machine to which the tool is applied. It by this method of transferring the vibrations that it is possible to use also motors having a reduced power to respect the environment and for the welfare of the operator, no more subjected to strong stresses (Bruel & Kjaer - Mechanical Vibration and Shock Measurements, Pages. 69-78).

In figure 2C the following parts can be seen, said parts being listed in the following with the relevant reference number.
1. movable part of the hook
2. fixed part of the hook
17 - 18 rubber pads
19. branches section to be vibrated

In figure 2D the following parts can be seen, said parts being listed in the following-with the relevant reference.
M. movable part of the shear
N. fixed part of the shear
27. pin guide
28. guide pin
29. upper cut profile
30. lower cut profile

In figure 2F the following parts can be seen, said parts being listed in the following with the relevant reference number.
36. guide bushing
37. cylinder rod
38. piston rod

In figures 2A - 2B the following parts can be seen, said parts being listed in the following with the relevant reference.
3. main body of the vibration generator
4. pinion gear
5. gear
6. connecting rod
7. transfer ring nut
8. piston
9. rod, lower part
10. check valve
11. oil tank
12. volume recovery piston
13. oscillating valve
14. springs
15. ring nut with vibration intensity adjustment
16. preloading spring
O. hydraulic oil
A2. Rod containing the output shaft
F1. Element for fixing to the body 3
F2. Further fixing element
C. cylinder rod
20. spring 2 and 22 resting ring for positioning the piston 8
23. fixing sleeve for the ring 20 and for guiding the cylinder C
24. ring for resting the upper spring on the rod 12 of the piston 8
25. ring for resting the lower spring on the piston 8
26. guide bushing
32. bearings
33. vent valve
34. screws for fixing the rod A2
39. cylinder side threading
40. piston side threading

The adaptive hook is applied to a sinusoidal vibration generator. Said vibration generator is fixed, as already mentioned, to another instrument, such as a bush-cutter, provided with a suitable interface. This feature makes the inventive solution more interesting, since it uses necessary energy from said instrument. The hook - vibration generator assembly is comprised (see figure 2) of the features disclosed in claim 1.

Said main body 3, generating vibrations, is comprised of a pinion gear 4 and of a gear 5, of a connecting rod 6 and of a transfer ring nut 7. Said cylinder C has on the end of the rod A1 the movable part 2 of the hook, and in the lower part 9 they are included: a check valve 10, oil tank 11, a volume recovery piston 12 and an oscillating valve 13, provided with springs 14. Particularly, said vibration intensity adjusting element acts by a ring nut 15 on a preloading spring 16. Extension (see fig. 2E) applied on the end of the rod A1 transmits the vibrations to the device to be used and allows to reach the farther branches, keeping once again in mind that the object of the present application is powered by a machine that can be, as already said, a bush-cutter, of which it uses the motor. It must be clear that the invention can operate autonomously, operated by every actuator.

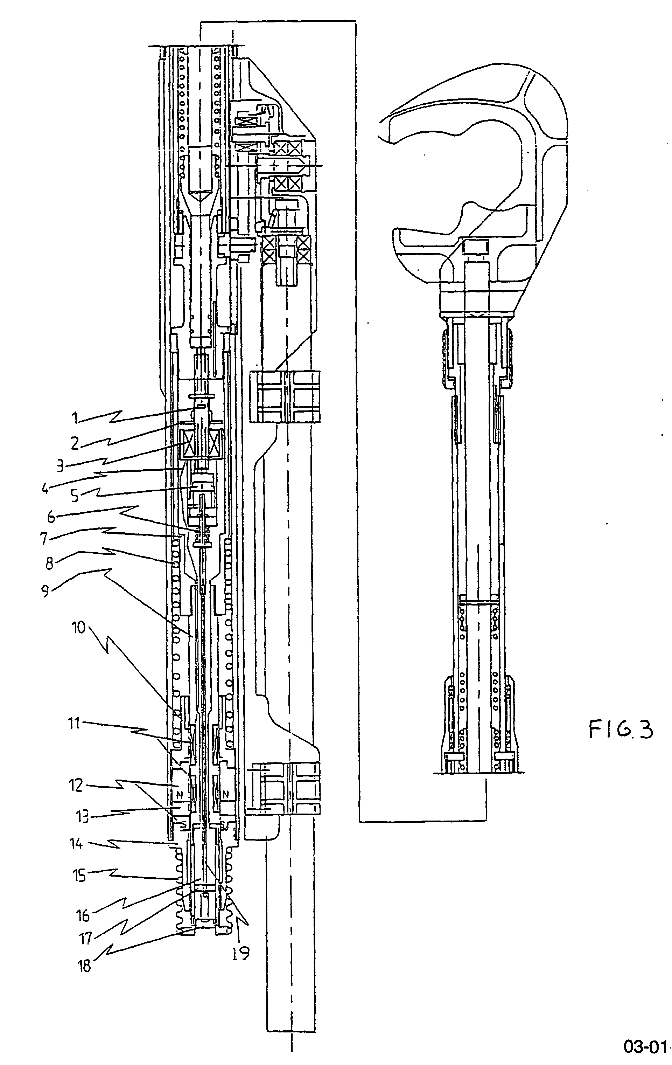

Making now specific reference to figure 3, it is shown a preferred embodiment of the adaptive hook according to the invention.

Particularly, is shown the preferred embodiment of the electrohydraulical re-opening of the adaptive hook.

Said re-opening system has been conceived in such a way that when the input tension is lacking, the switching gear is always opened.

Generator is piloted by the same oscillations of the machine, producing the necessary tension to activate the device, then to switch in absence the vibrations and thus of the input tension.

.. Re-opening control of the hydraulic circuit comprises the switching of a valve after the vibrating activity.

It is piloted by the electrical power provided by a permanent magnet linear generator. Magnet is fixed within the structure of the machine, while electrical winding, wound on two sections, follows the machine oscillations.

The operation idea is based on the generation of the tension during the oscillations of the machine and to the interruption of the same, the release of an electromagnet restore a hydraulic switching gear, in an open position.

Observing now figure 3 the various component parts are shown, indicated by the relevant reference number.
1. oil discharge switching port
2. skirt of the electromagnet connected to the hydraulic gear
3. electromagnet winding
4. electric wires for the connection of the generator
5. check valve of the hydraulic circuit
6. restoring spring for the manual operation of the valve
7. structure containing the oil and the electrohydraulic device
8. restoring spring of the top death centre of the hook
9. ferromagnetic structure
10. nylon guide
11. electrical winding in two sections
12. polar expansions
13.permanent magnet
14. fixing ring nut for the whole structure
15. dust protection bellow
16. extension of the oil tank
17. volume restoring piston
18. re-opening manual control
19. manual control stem for re-opening the valve.

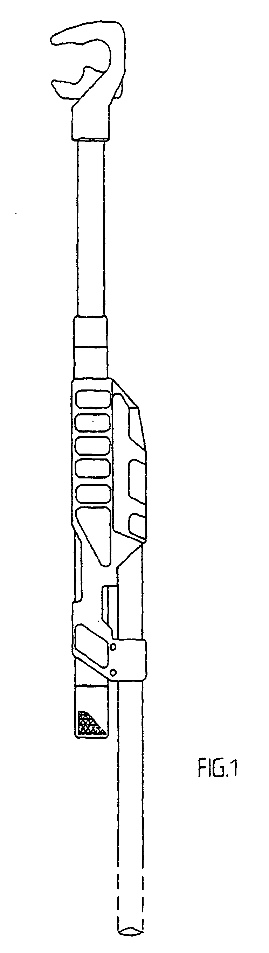

As to the operation of the embodiment shown in figure 1, reference is made to the previous specification.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Adaptive hook with a sinusoidal vibration generator, comprised of a hook including a fixed part (1) and a movable part (2); of a main body (3) generating vibrations, of a rod (A1) and of a rod (A2) induding an output shaft, of a vibration intensity adjusting element (15), **characterized by** said movable part (2) being made movable by a connecting rod-crank system creating a reciprocating motion provided within the main body (3) and by a cylinder (C) which has on the end of the rod (A1) the movable part (2) of the hook.

2. Adaptive hook according to claim 1, **characterised in that** said main body (3) generating vibrations is comprised of a pinion gear (4) and of a gear (5), of a connecting rod (6) and of a transfer ring nut (7).

3. Adaptive hook according to claim 1, **characterised in that** said cylinder (C) bring at the end of the rod (A1) the same hook and in the lower part (9) they are contained: check valve (10), oil tank (11), a volume recovery piston (12) and an oscillating valve (13), provided with springs (14).

4. Adaptive hook according to claim 1, **characterised in that** said vibration intensity adjustment element (15) acts by a ring nut on a preloading spring (16).

5. Adaptive hook according to claim 1, **characterised in that** a prune tool is provided, applied to a sinusoidal vibration generator, said prune tool being comprised of two blades, one (N) of which is fixed and one (M) is movable.

6. Adaptive hook according to claim 1, **characterised in that** it is provided with a extension, to allow its remote use.

7. Adaptive hook according to daim 5, **characterised in that** said prune tool is provided with a extension, to allow its remote use.

8. Adaptive hook according to claim 1, **characterised in that** it is provided a system for the electro-hydraulic re-opening of the adaptive hook.

9. Adaptive hook according to claim 8, **characterised in that** said re-opening system, in absence of input tension, provides an always open switching gear.

10. Adaptive hook according to claim 8 or 9, **characterised in that** the generator of the re-opening system is piloted by the same oscillations of the machine, producing the tension necessary to activate the device, to switch then in absence of the vibrations and thus of the input tension.

11. Adaptive hook according to one of the claims 8 - 10, **characterised in that** the re-opening control of the hydraulic circuit provides the switching of a valve after the vibrating activity.

12. Adaptive hook according to claim 11, **characterised in that** said hydraulic re-opening control is piloted by the electric power of a permanent magnet linear generator.

13. Adaptive hook according to claim 12, **characterised in that** said magnet is fixed within the machine structure, while the electric winding, wound in two sections, follows the oscillations of the machine.

## Patentansprüche

1. Adaptiver Haken mit einem Sinusschwingungsgenerator, enthaltend einen Haken aus einem festen Teil (1) und einem beweglichen Teil (2), einen Schwingungen erzeugenden Hauptkörper (3), eine Stange (A1) und eine Stange (A2), die einen Ausgangsschaft umfasst, und ein Schwingungsintensitäts-Einstellelement (15),
**dadurch gekennzeichnet,**
**dass** das bewegliche Teil (2) mit Hilfe eines Verbindungs-Kurbeltriebsystems, welches eine Hin- und Herbewegung erzeugt und innerhalb des Hauptkörpers (3) angeordnet ist, und mittels eines Zylinders (C) bewegbar ist, der am Ende der Stange (A1) den beweglichen Teil (2) des Hakens aufweist.

2. Adaptiver Haken nach Anspruch 1, **dadurch gekennzeichnet, dass** der Schwingungen erzeugende Hauptkörper (3) ein Ritzel (4) und ein Zahnrad (5), eine Verbindungsstange (6) und einen Übertragungsringbolzen (7) aufweist.

3. Adaptiver Haken nach Anspruch 1, **dadurch gekennzeichnet, dass** der Zylinder (C) am Ende der Stange (A1) den Haken hat und dass im unteren Teil (9) ein Absperrventil (10), ein Öltank (11), ein Volumenausgleichskolben (12) und ein Schwingungsventil (13), versehen mit Federn (14), enthalten sind.

4. Adaptiver Haken nach Anspruch 1, **dadurch gekennzeichnet, dass** das Schwingungsintensitätseinstellelement (15) über eine Ringmutter auf eine Vorspannungsfeder (16) einwirkt.

5. Adaptiver Haken nach Anspruch 1, **gekennzeichnet durch** ein Astschneidewerkzeug, das an einen Sinusschwingungsgenerator angekoppelt ist und zwei Klingen aufweist, von denen eine (N) fest und die andere (M) beweglich ist.

6. Adaptiver Haken nach Anspruch 1, **dadurch gekennzeichnet, dass** er mit einer Verlängerung versehen ist, welche seine Benutzung von fern erlaubt.

7. Adaptiver Haken nach Anspruch 5, **dadurch gekennzeichnet, dass** das Astschneidewerkzeug mit einer Verlängerung versehen ist, welche seine Benutzung von fern erlaubt.

8. Adaptiver Haken nach Anspruch 1, **dadurch gekennzeichnet, dass** er mit einem System zum elektrohydraulischen Wiederöffnen des adaptiven Hakens versehen ist.

9. Adaptiver Haken nach Anspruch 8, **dadurch gekennzeichnet, dass** das Wiederöffnungssystem bei fehlender Eingangsspannung ein immer offenes Schaltzahnrad (switching gear) bildet.

10. Adaptiver Haken nach Anspruch 8 oder 9, **dadurch gekennzeichnet, dass** der Generator des Wiederöffnungssystems durch dieselben Schwingungen der Maschine gesteuert wird, welche die zur Aktivierung des Gerätes erforderliche Spannung erzeugen, um dann bei fehlenden Schwingungen und damit der Eingangsspannung, zu schalten.

11. Adaptiver Haken nach einem der Ansprüche 8 bis 10,
**dadurch gekennzeichnet, dass** die Wiederöffnungssteuerung des hydraulischen Kreises das Schalten eines Ventils nach der Schwingungsaktivität vorsieht.

12. Adaptiver Haken nach Anspruch 11, **dadurch gekennzeichnet, dass** die Hydraulikwiederöffnungssteuerung durch die
elektrische Energie eines Permanentmagnetlineargenerators gesteuert wird.

13. Adaptiver Haken nach Anspruch 12, **dadurch gekennzeichnet, dass** der Magnet innerhalb des Maschinenaufbaus fest angeordnet ist, während die in zwei Abschnitten gewickelte
elektrische Wicklung den Schwingungen der Maschine folgt.

## Revendications

1. Crochet adaptable avec un générateur de vibrations sinusoïdales, comprenant un crochet incluant une partie fixe (1) et une partie mobile (2) ; un corps principal (3) générant des vibrations, une tige (A1) et une tige (A2) incluant un arbre de sortie, un élément de réglage de l'intensité des vibrations (15), **caractérisé en ce que** ladite partie mobile (2) est rendue mobile par un système de raccordement tige / coulisse produisant un mouvement de va-et-vient, prévu à l'intérieur du corps principal (3), et un cylindre (c) qui comporte, sur l'extrémité de la tige (A1), la partie mobile (2) du crochet.

2. Crochet adaptable selon la revendication 1, **caractérisé en ce que** ledit corps principal (3) générant des vibrations est constitué d'un engrenage à pignons (4) et d'un engrenage (5), d'une tige de raccordement (6) et d'un écrou à oeil amovible (7).

3. Crochet adaptable selon la revendication 1, **caractérisé en ce que** ledit cylindre (C) porte le même crochet à l'extrémité de la tige (A1) et, dans la partie inférieure (9), se trouvent: un clapet anti-retour (10), un réservoir d'huile (11), un piston de rétablissement du volume (12) et une soupape oscillante (13), dotée de ressorts (14).

4. Crochet adaptable selon la revendication 1, **caractérisé en ce que** ledit élément de réglage de l'intensité des vibrations (15) agit par l'intermédiaire d'un écrou à oeil sur un ressort de précontrainte (16).

5. Crochet adaptable selon la revendication 1, **caractérisé en ce qu'**il est prévu un outil d'élagage, appliqué à un générateur de vibrations sinusoïdales, ledit outil d'élagage comprenant deux lames, l'une (N) étant fixe et l'autre (M) mobile.

6. Crochet adaptable selon la revendication 1, **caractérisé en ce qu'**il est doté d'un prolongement, pour permettre une utilisation à distance.

7. Crochet adaptable selon la revendication 5, **caractérisé en ce que** ledit outil d'élagage est doté d'un prolongement pour permettre une utilisation à distance.

8. Crochet adaptable selon la revendication 1, **caractérisé en ce qu'**il est prévu un système pour la réouverture électro-hydraulique du crochet adaptable.

9. Crochet adaptable selon la revendication 8, **caractérisé en ce que** ledit système de réouverture, en l'absence de tension d'entrée, permet d'obtenir un organe de couplage toujours ouvert.

10. Crochet adaptable selon l'une quelconque des revendications 8 ou 9, **caractérisé en ce que** le générateur du système de réouverture est piloté par les mêmes oscillations de la machine, produisant la tension nécessaire pour activer le dispositif, le manoeuvrer en l'absence de vibrations, et ainsi de tension d'entrée.

11. Crochet adaptable selon l'une quelconque des revendications 8 à 10, **caractérisé en ce que** la commande de réouverture du circuit hydraulique permet de manoeuvrer une soupape après l'activité vibratoire.

12. Crochet adaptable selon la revendication 11, **caractérisé en ce que** ladite commande de réouverture hydraulique est pilotée par l'alimentation électrique d'une génératrice linéaire à aimant permanent.

13. Crochet adaptable selon la revendication 12, **caractérisé en ce que** ledit aimant est fixé à l'intérieur de la structure de la machine, tandis que le bobinage électrique, enroulé en deux sections, suit les oscillations de la machine.
